# EUROPEAN PATENT APPLICATION

(11) **EP 3 015 235 A1**
(43) Date of publication of application: **04.05.2016**
(21) Application number: 14818510.1
(22) Date of filing: 30.05.2014
(51) Int. Cl.: B28B 11/10

(54) **HONEYCOMB STRUCTURE MANUFACTURING METHOD AND GREEN HONEYCOMB MOLDING SEALING JIG**

(30) Priority: 28.06.2013 JP 2013136557
(71) Applicant: Sumitomo Chemical Company, Limited, Tokyo 104-8260 (JP)
(72) Inventor: INOUE Masashi, Niihama-shi Ehime 792-8521 (JP); IKAWA Hiroyuki, Niihama-shi Ehime 792-8521 (JP); KOMORI Teruo, Niihama-shi Ehime 792-0804 (JP)
(74) Representative: Vossius & Partner Patentanwälte Rechtsanwälte mbB
(86) International application number: PCT/JP2014/064505
(87) International publication number: WO 2014/208276

(57) **Abstract**

An integrated closing tool is inserted into a part of hexagonal cells in a green honeycomb molded body including a plurality of hexagonal cells that open in an upper surface and a lower surface of a columnar body and are mutually partitioned by partition walls to join the partition walls together, thereby closing the hexagonal cells. A part of the integrated closing tool is separated, and tool separated pieces separated from a part of the hexagonal cells into which the closing tool has been inserted are removed.

## Description

### Technical Field

An aspect of the present invention relates to a method for producing honeycomb structures and a closing tool for green honeycomb molded bodies, and also relates to a method for producing honeycomb structures in which a green honeycomb molded body is fired to produce a honeycomb structure, and a closing tool for green honeycomb molded bodies.

### Background Art

For example, ceramic honeycomb structures having a plurality of through-holes of a cross-sectional polygonal shape are conventionally known. Such honeycomb structures are used, for example, in particulate-matter-removing filters such as diesel particulate filters. In a production process of such honeycomb structures, a ceramic raw material powder is formed by extruding to produce a green honeycomb molded body. A part of through-holes in this green honeycomb molded body are closed at the end surface. A honeycomb structure is produced by firing a green honeycomb molded body with closed through-holes. Patent Literature 1 discloses a method for producing such honeycomb structures. In Patent Literature 1, projections in a closing tool having a plurality of quadrangular pyramid-shaped projections are inserted into a part of the through-holes in the green honeycomb molded body to gather together ends of partition walls that partition the through-holes and to connect the ends of these partition walls, thereby closing the through-holes.

### Citation List

### Patent Literature

PTL 1: Japanese Unexamined Patent Publication No. H8-508199

### Summary of Invention

### Technical Problem

However, in the method in the above Patent Literature 1, when the number of through-holes into which the closing tool is inserted increases, there is a drawback that removing the closing tool after closing the through-holes becomes difficult. On the other hand, a method in which the closing tool is inserted a plurality of times into a small number of through-holes at a time has a drawback that the number of through-holes that can be closed at the same time is reduced, leading to a lowered closing efficiency.

In the technical field, a method for producing a honeycomb structure and a closing tool for a green honeycomb molded body that can produce a honeycomb structure more efficiently and easily have been desired.

### Solution to Problem

One aspect of the present invention is a method for producing a honeycomb structure comprising a plurality of holes that open in an end surface of a columnar body and are mutually partitioned by partition walls, the method comprising a closing step of closing through-holes by inserting a closing tool into a part of a plurality of the through-holes in a green honeycomb molded body comprising the plurality of through-holes that open in the end surface of the columnar body and are mutually partitioned by partition walls to join the partition walls together; and a removal step of removing the closing tool inserted into a part of the through-holes in the closing step from the through-holes, wherein, at the closing step, the integrated closing tool is inserted into the plurality of the through-holes simultaneously, and, at the removal step, a part of the integrated closing tool is separated and the separated closing tool is removed from a part of the through-holes into which the closing tool was simultaneously inserted at the closing step.

According to this construction, in a method for producing a honeycomb structure comprising a plurality of holes that open in an end surface of a columnar body and are mutually partitioned by partition walls, the method comprises a closing step of closing through-holes by inserting a closing tool into a part of a plurality of the through-holes in a green honeycomb molded body comprising the plurality of through-holes that open in the end surface of the columnar body and are mutually partitioned by partition walls to join the partition walls together; and a removal step of removing the closing tool inserted into a part of the through-holes in the closing step from the through-holes. At the closing step, the integrated closing tool is inserted into the plurality of the through-holes simultaneously, and, thus, a plurality of through-holes can be closed in a simultaneous and efficient manner. On the other hand, at the removal step, a part of the integrated closing tool is separated and the separated closing tool is removed from a part of the through-holes into which the closing tool was simultaneously inserted at the closing step. Thereby, the removal of the closing tool from the through-holes is facilitated. Therefore, the production of honeycomb structures can be carried out more efficiently and easily.

In this case, at the closing step, by inserting a closing tool into a part of through-holes, the partition walls can be joined together so that the partition walls are parallel to each other over a prescribed length from the end surface.

According to this method, at the closing step, by inserting a closing tool into a part of through-holes, the partition walls can be joined together so that the partition walls are parallel to each other over a prescribed length from the end surface. Accordingly, when the honeycomb structure is used as a particulate-matter-removing filter such as a diesel particulate filter, the air resistance in the junction between the partition walls is reduced and pressure loss can be reduced. Further, chipping or the like at the joined end can be made less likely to occur. When the joining is performed so that the partition walls are parallel to each other over a prescribed length from the end surface, the area of contact between the partition walls and the closing tool increases and it is difficult to remove the closing tool from the through-holes. However, in this construction, a part of the integrated closing tool is separated and the separated closing tool is removed from a part of the through-holes into which the closing tool was simultaneously inserted. Therefore, even when the area of contact between the partition walls and the closing tool has become large, the closing tool can easily be removed from the through-holes.

Further, another aspect of the present invention is a closing tool for a green honeycomb molded body comprising a plurality of through-holes that open in an end surface of a columnar body and are mutually partitioned by partition walls, the closing tool comprising: a base; and a plurality of closing projections that are arranged at positions corresponding to a part of the plurality of through-holes in the base and are respectively inserted into a part of the plurality of through-holes to join the partition walls together, thereby closing the through-holes, wherein the base has split pieces with a part of the plurality of closing projections arranged therein, and the split pieces are integratable with and separable from the base.

### Advantageous Effects of Invention

A method for producing a honeycomb structure according to one aspect of the present invention and a closing tool for a green honeycomb molded body can produce a honeycomb structure more efficiently and easily.

### Brief Description of Drawings

Fig. 1(a) is a perspective view of a green honeycomb mol ded body before closing.
Fig. 1(b) is a partial enlarged view of Fig. 1(a).
Fig. 2 is a perspective view illustrating a closing tool for an inlet side of a green honeycomb molded body according to an embodiment.
Fig. 3 is an enlarged perspective view of a portion A of Fig. 2.
Fig. 4 is an enlarged plan view of a portion A of Fig. 2.
Fig. 5 is an enlarged perspective view of a portion B of Fig. 2.
Fig. 6 is a perspective view illustrating an exploded state of a closing tool of Fig. 5.
Fig. 7 is an enlarged perspective view of a site corresponding to a portion A of Fig. 2 in a closing tool for an outlet side of a green honeycomb molded body in an embodiment.
Fig. 8 is an enlarged plan view of a site corresponding to a portion A of Fig. 2 in a closing tool for an outlet side of a green honeycomb molded body in an embodiment.
Fig. 9 is a side view illustrating an initial state of a closing step on an inlet side of a green honeycomb molded body in an embodiment.
Fig. 10 is a side view illustrating a final state of a closing step on an inlet side of Fig. 9.
Fig. 11 is a cross-sectional view illustrating an upper surface of a green honeycomb molded body in an initial state of a closing step on an inlet side illustrated in Fig. 9.
Fig. 12 is a cross-sectional view illustrating an upper surface of a green honeycomb molded body in a middle state of a closing step on an inlet side illustrated in Figs. 9 and 10.
Fig. 13 is a cross-sectional view illustrating an upper surface of a green honeycomb molded body in a final state of a closing step on an inlet side illustrated in Fig. 10.
Fig. 14 is a cross-sectional view illustrating an upper surface of a green honeycomb molded body in a final state of a closing step on an inlet side illustrated in Fig. 10 in the case where an another form of closing tool is used.
Fig. 15 is a cross-sectional view illustrating a lower surface of a green honeycomb molded body in an initial state of a closing step on an outlet side.
Fig. 16 is a cross-sectional view illustrating a lower surface of a green honeycomb molded body in a middle state of a closing step on an outlet side.
Fig. 17 is a cross-sectional view illustrating a lower surface of a green honeycomb molded body in a final state of a closing step on an outlet side.
Fig. 18 is a side view illustrating a state where a closing tool is separated and removed in a final state of a closing step on an inlet side illustrated in Fig. 13.
Fig. 19 is a side view illustrating a state in which the remaining closing tool in Fig. 18 is removed.

### Description of Embodiments

Embodiments of the present invention will be described below in detail with reference to the accompanying drawings.

### (Green honeycomb molded body)

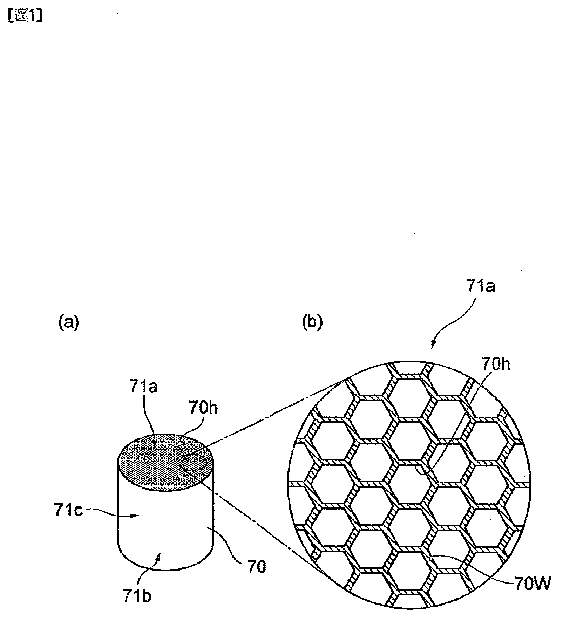

First, a green honeycomb molded body that is an object to be machined in the embodiment of the present invention will be described. As illustrated in Fig. 1(a), a green honeycomb molded body 70 according to this embodiment is, for example, a cylindrical body that has an upper surface 71a, a lower surface 71b, and a side surface 71c and in which a plurality of hexagonal cells 70h that are hexagonal through-holes are arranged substantially parallel in the upper surface 71 a and the lower surface 71b. The green honeycomb molded body 70 is an unfired molded body that, by firing later, becomes a porous ceramic. The length of the direction in which the hexagonal cells 70h in the green honeycomb molded body 70 extend is not particularly limited but may be, for example, 40 to 400 mm. The outer diameter of the green honeycomb molded body 70 is also not particularly limited but may be, for example, 10 to 360 mm.

The hexagonal cells 70h are each partitioned by partition walls 70W that extend substantially parallel to a central axis of the green honeycomb molded body 70. The thickness of the partition walls 70W may be not more than 0.8 mm, not more than 0.5 mm, and not less than 0.1 mm. It should be noted that the outer shape of the green honeycomb molded body 70 is not limited to a cylindrical shape and may be an elliptical column, an angular column (for example, a regular polygonal column such as a triangular column, a square column, a hexagonal column, or an octagonal column; or a triangular column, a square column, a hexagonal column, or an octagonal column other than the regular polygonal column) or the like. In this embodiment, a cylindrical shape of the green honeycomb molded body 70 will be described. Further, in this embodiment, a green honeycomb molded body 70 including hexagonal cells 70h that are regular hexagonal through-holes will be given as an example. However, green honeycomb molded bodies 70 including cells that are through-holes that have hexagonal shapes other than a regular hexagonal shape or hexagonal shapes having a different size may also be used.

Such a green honeycomb molded body 70 is produced by extruding a ceramic composition with an extruder. In this case, in order to prepare a ceramic composition, a powder of an inorganic compound source which is a ceramic raw material, an organic binder, a solvent, and, if necessary, additives to be added are prepared.

Inorganic compound source powders include powders containing two or more types of powders selected from the group consisting of aluminum source powders, magnesium source powders, silicon source powders, and titanium source powders, or powders containing any one of one or more types of powders selected from silicon carbide source powders, silicon nitride source powders, and aluminum nitride source powders. In order to improve heat resistance and mechanical strength of products, one or more types of any one of carbon source powders, zirconium source powders, molybdenum source powers, and calcium source powders may be added to the inorganic compound source powders. Including aluminum source powders, magnesium source powders, titanium source powders, and silicon source powders can improve heat resistance. Examples of organic binders include celluloses such as methylcellulose, carboxylmethylcellulose, hydroxyalkylmethylcellulose, and sodium carboxylmethylcellulose; alcohols such as polyvinyl alcohol; and lignin sulfonic acid salts. Additives include, for example, pore forming agents, lubricating agents and plasticizers, dispersing agents, and solvents.

The green honeycomb molded body according to this embodiment is produced by mixing the prepared raw materials with a kneader or the like to obtain a raw material mixture and extruding the raw material mixture thus obtained through an extruder having an outlet opening corresponding to the sectional shape of the partition walls 70W.

### (closing tool)

The closing tool in this embodiment will be described below. In this embodiment, when a green honeycomb molded body 70 is applied to a particulate-matter-removing filter such as a diesel particulate filter after firing, a closing tool used in the upper surface 71a functioning as an exhaust gas supply side (an inlet side) and a closing tool used in the lower surface 71b functioning as an exhaust gas discharge side (an outlet side) have different closing projections. First, the closing tool for closing the upper surface 71 a functioning as the exhaust gas supply side (inlet side) will be described.

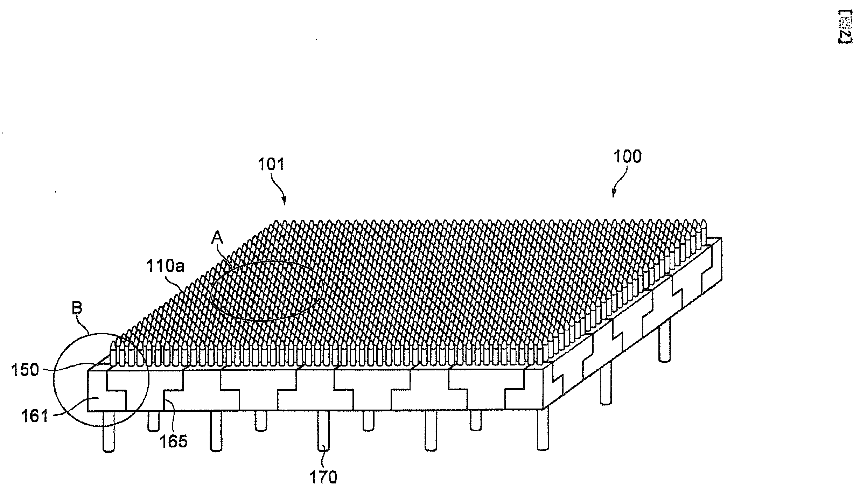

As illustrated in Fig. 2, a closing tool 100 in this embodiment includes a substantially flat plate-shaped base 150 and a plurality of closing projections 110a that are arranged on a closing surface 101 in the base 150 for closing the upper surface 71a. The size of the closing surface 101 is larger than an area corresponding to an area of the upper surface 71 a or the lower surface 71b in the green honeycomb molded body 70 to be closed, or an area of the upper surface 71 a or the like. Accordingly, by inserting the closing tool 100 only once into the hexagonal cells 70h in the green honeycomb molded body 70, all of the hexagonal cells 70h that should be closed in the upper surface 71a or the lower surface 71b can be closed.

The base 150 is split at a separating line 165 into a plurality of tool separated pieces 161. As will be described later, the plurality of tool separated pieces 161 constituting the base 150 are each configured to be integratable and separable while supporting the closing projections 110a. A surface of the tool separated pieces 161 opposite to the closing surface 101 has a tool separated piece lever 170 that is a cylindrical metal rod.

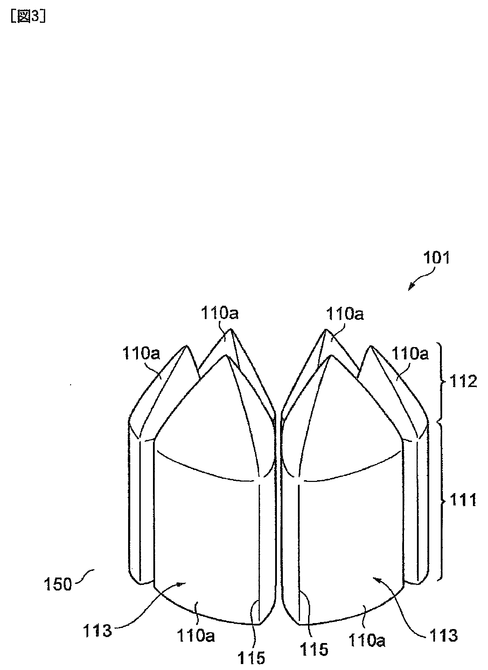

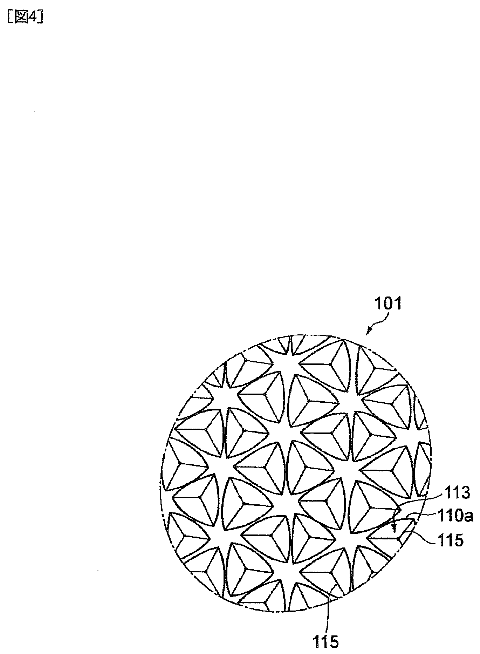

As illustrated in Figs. 3 and 4 that are an enlarged view of a portion A in Fig. 2, the closing projections 110a include a triangular prismatic base 111 and a triangular pyramid-shaped tip 112. The triangular prismatic base 111 is located at the base of the closing projections 110a and is projected from the closing surface 101. The triangular prismatic base 111, the triangular pyramid-shaped tip 112 is located at a tip of the closing projections 110a and on the upper part of the triangular prismatic base 111. The triangular pyramid-shaped tip 112 has a triangular pyramid shape including a bottom surface having a size corresponding to the upper surface of the triangular prismatic base 111.

The triangular prismatic base 111 includes a triangular prismatic side surface 113 that is a side surface of a triangular prism, and a round chamfering lateral edge 115 that is a lateral edge of a triangular prism. In the round chamfering lateral edge 115, each lateral edge of the triangular prism has been subjected to round chamfering at a prescribed curvature. The distance between the triangular prismatic side surfaces 113 in closing projections 110a that adjoin each other is at least not less than or at least not less than twice the distance from the closing surface 101 to the upper end of the triangular prismatic side surface 113.

As illustrated in Fig. 4, the apexes of the triangular pyramid-shaped tip 112 in the respective closing projections 110a are arranged at respective positions so as to correspond to six hexagonal cells 70h that adjoin around one hexagonal cell 70h as a center in the plurality of hexagonal cells 70h in the green honeycomb molded body 70. Further, the round chamfering lateral edges 115 of the triangular prismatic base 111 in the respective closing projections 110a are arranged in a direction in which the projections abut against partition walls 70W. The size of each of the triangular prismatic bases 111 is such that the length that the round chamfering lateral edge 115 projects on the closing surface 101 from just above the closing surface 101 corresponding to a length between the centers of adjacent hexagonal cells 70h in the green honeycomb molded body 70.

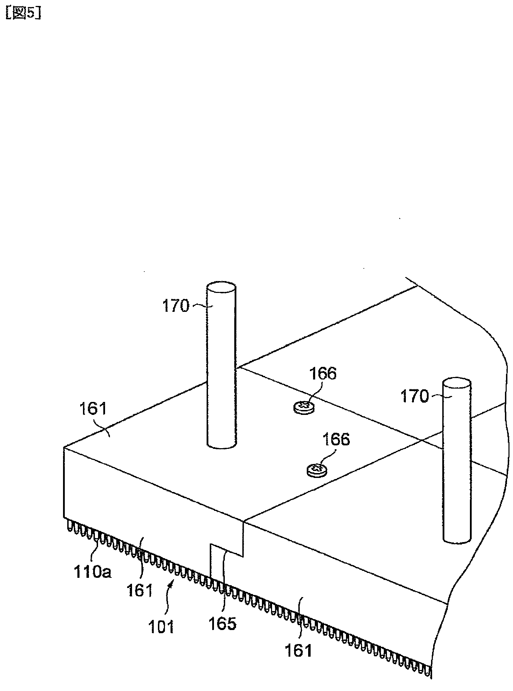

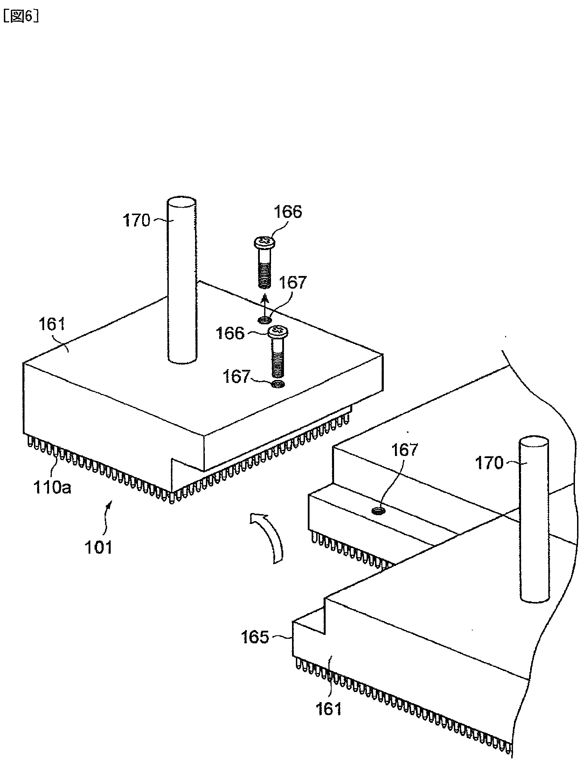

As illustrated in Fig. 5 that is an enlarged view of a portion B in Fig. 2, each of the tool separated pieces 161 in the base 150 are integrated with each other at a separating line 165 and fastened with a screw 166. As illustrated in Fig. 6, by removing the screw 166 from a screw hole 167, the tool separated pieces 161 can respectively be separated from each other. In this embodiment, as will be described later, the whole closing tool 100 can be inserted into the hexagonal cells 70h in the green honeycomb molded body 70 followed by the removal of the closing tool 100 from the green honeycomb molded body 70 while separating the tool separated pieces 161 every other tool spit piece.

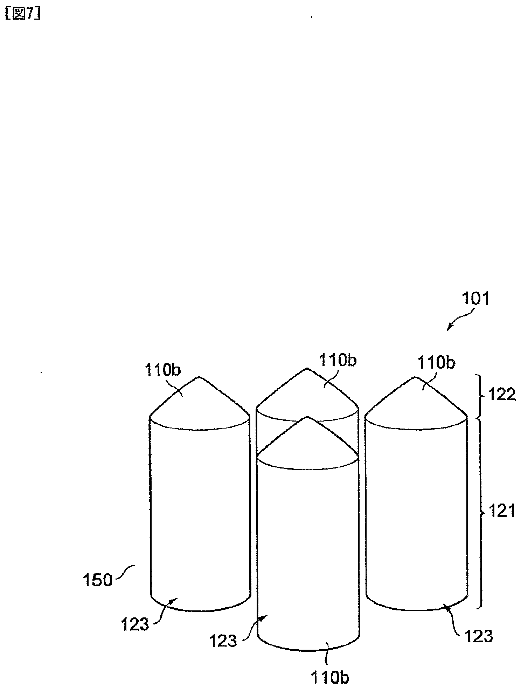

On the other hand, closing projections 110b arranged on the closing surface 101 for closing of the lower surface 71b functioning as an exhaust gas discharge side (an outlet side) when the green honeycomb molded body 70 is applied to a particulate-matter-removing filter such as a diesel particulate filter after firing will be described. As illustrated in Fig. 7, the closing projections 110b include a cylindrical base 121 and a conical tip 122. The cylindrical base 121 includes a cylindrical side surface 123 that is a side surface of the cylinder. The distance between cylindrical side surfaces 123 in adjacent closing projections 110b is at least not less than or at least not less than twice the distance from the closing surface 101 to the upper end of the cylindrical side surface 123.

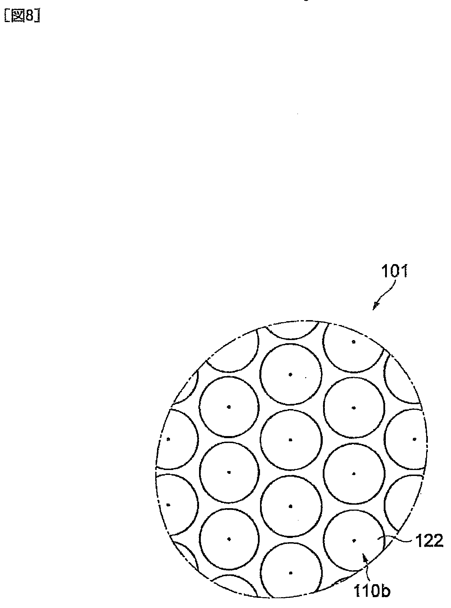

As illustrated in Fig. 8, the apexes of the respective closing projections 110b are arranged in such a way as to be at positions corresponding to one hexagonal cell 70h that adjoins that is surrounded by six hexagonal cells 70h respectively adjoining around a plurality of hexagonal cells 70h in the green honeycomb molded body 70. One hexagonal cell 70h located at a position corresponding to the closing projections 110b is one hexagonal cell 70h that is surrounded by six adjoined hexagonal cells 70h located at positions corresponding to the closing projections 110a in the upper surface 71a.

Accordingly, in the upper surface 71a, the closing projections 110a are inserted into six hexagonal cells 70h that each adjoin around one hexagonal cell 70h as a center, and, in the lower surface 71b, the closing projections 110b are inserted into one hexagonal cell 70h that is surrounded by six adjoining hexagonal cells 70h into which closing projections 110a are inserted in the upper surface 71a thereof. The size of each of the closing projections 110b is made so that the radius of the bottom surface in the closing projections 110b becomes a length corresponding to a length between opposite sides of the hexagonal cell 70h in the green honeycomb molded body 70.

### (closing step)

The step of closing the green honeycomb molded body 70 in this embodiment will be described below. First, when the green honeycomb molded body 70 is applied to a particulate-matter-removing filter such as a diesel particulate filter after firing, the step of closing the upper surface 71a functioning as an exhaust gas supply side (an inlet side) will be described.

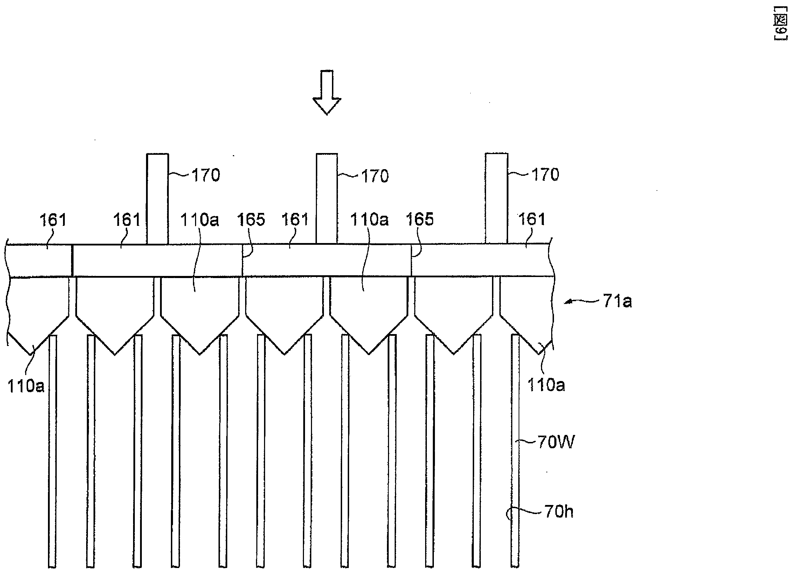

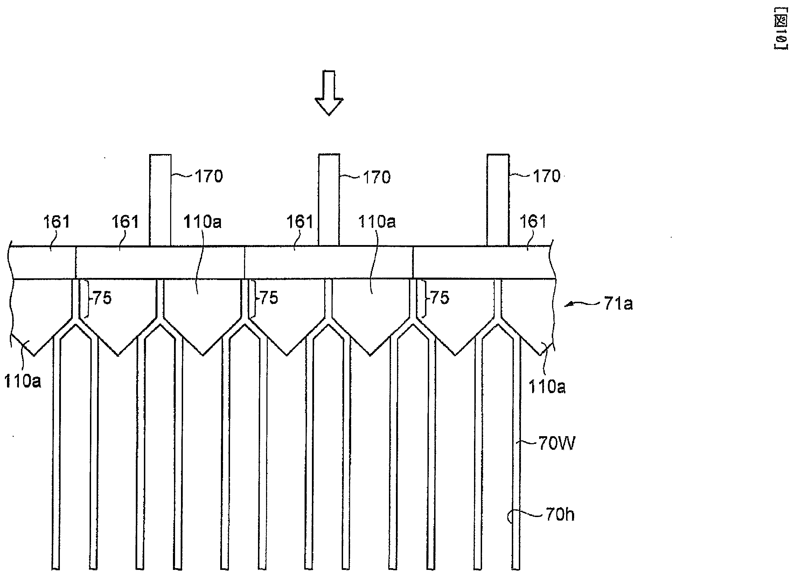

As illustrated in Fig. 9, the tool separated pieces 161 are each integrated as closing tools 100 by a screw 166. As indicated by an arrow in the drawing, the closing projections 110a in the closing tool 100 are inserted into a part of the hexagonal cells 70h. As illustrated in Fig. 10, when the closing projections 110a are fully inserted into the hexagonal cells 70h, partition walls 70W are mutually contact-bonded to each other. At a junction between the partition walls 70W, a partition wall extended junction 75 in which the partition walls 70W are joined parallel to each other over a prescribed length is formed. The length along a longitudinal direction of the green honeycomb molded body 70 of the partition wall extended junction 75 may be at least not less than the thickness of the partition walls 70W and may be at least twice the thickness of the partition walls 70W.

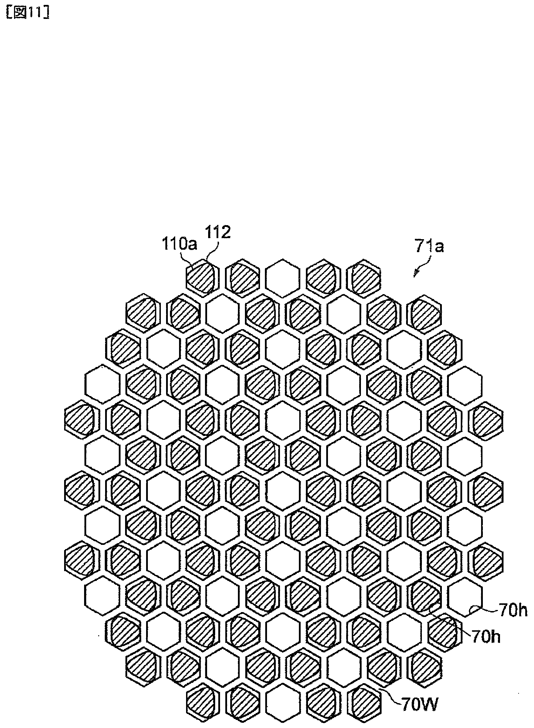

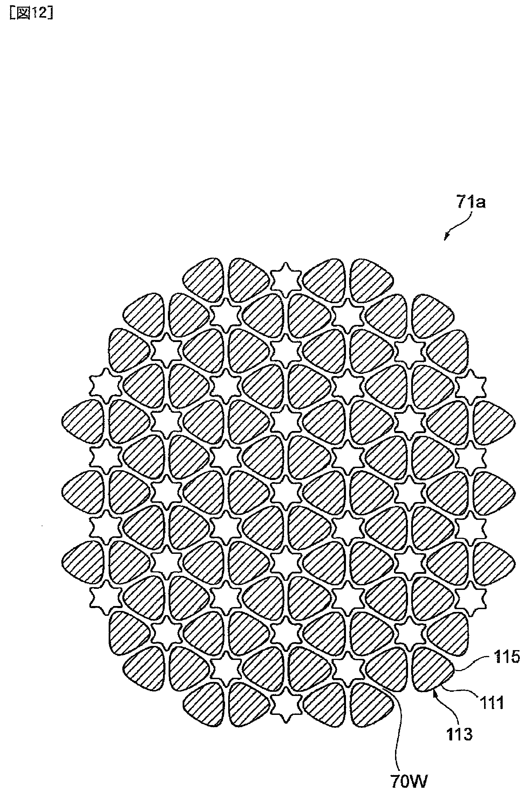

In closing the upper surface 71a, as illustrated in Fig. 11, in an initial state of closing in Fig. 9, the triangular pyramid-shaped tip 112 in the closing projections 110a is inserted into the six hexagonal cells 70h that adjoin around the one hexagonal cell 70h as the center. When the closing projections 110a are further inserted into the hexagonal cells 70h, as illustrated in Fig. 12, the triangular prismatic base 111 in the closing projections 110a is inserted into the hexagonal cells 70h. The round chamfering lateral edges 115 in the triangular prismatic base 111 are each abutted against the partition walls 70W. The closing projections 110a are pressed so as to close the hexagonal cells 70h, with the closing projections 110a not inserted thereinto, at the center of the six hexagonal cells 70h with the closing projections 110a inserted thereinto.

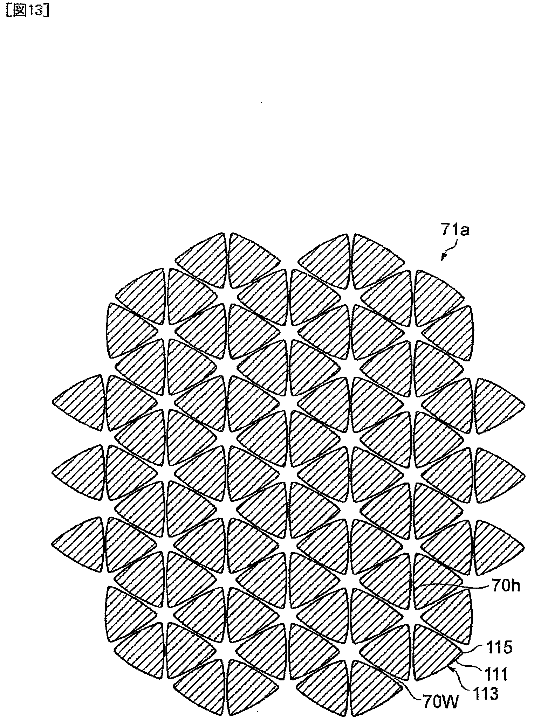

As illustrated in Fig. 10, when the closing projections 110a are further inserted into the hexagonal cells 70h, as illustrated in Fig. 13, the partition walls 70W pressed from six directions by the round chamfering lateral edge 115 and the triangular prismatic side surface 113 in the triangular prismatic base 111 are integrally contact-bonded to each other. At the end of the contact-bonded partition walls 70W, the partition wall extended junction 75 is formed between the triangular prismatic side surfaces 113 in the triangular prismatic base 111 to complete closing. Thus, in the upper surface 71 a functioning as an exhaust supply side (an inlet side), one hexagonal cell 70h that is surrounded by six hexagonal cells 70h each adjoining around the upper surface 71 a is closed.

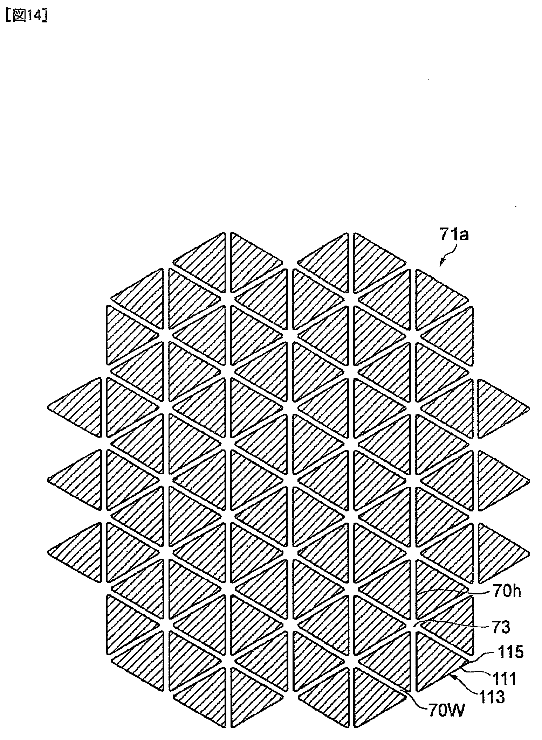

It should be noted that when the triangular prismatic side surface 113 in the triangular prismatic base 111 of the closing tool 100 is in a substantially plane form rather than a rounded form, as illustrated in Fig. 14 instead of Fig. 13, the thickness of the partition walls in the closing portion can be made substantially even.

On the other hand, in the case where the green honeycomb molded body 70 is applied to a particulate-matter-removing filter such as a diesel particulate filter after firing, in the step of closing the lower surface 71b functioning as an exhaust gas supply side (an inlet side), as described later, after the removal of the closing tool 100 from the green honeycomb molded body 70, closing is carried out in the same manner as described above using the closing tool 100 including closing projections 110b in the closing surface 101.

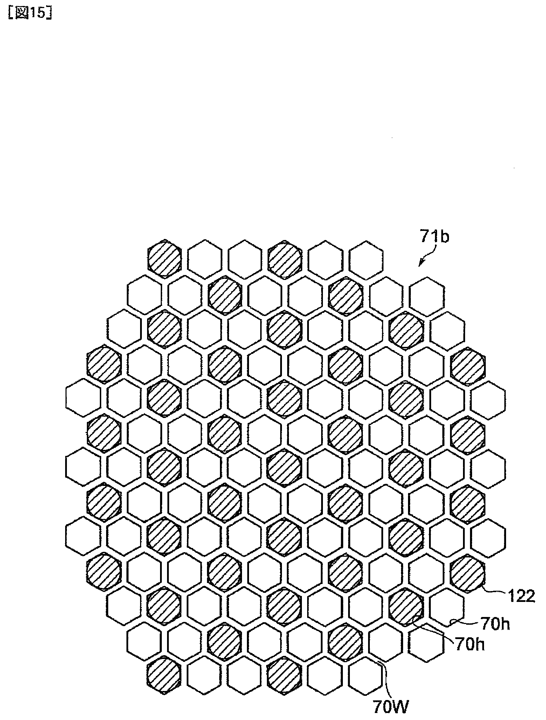

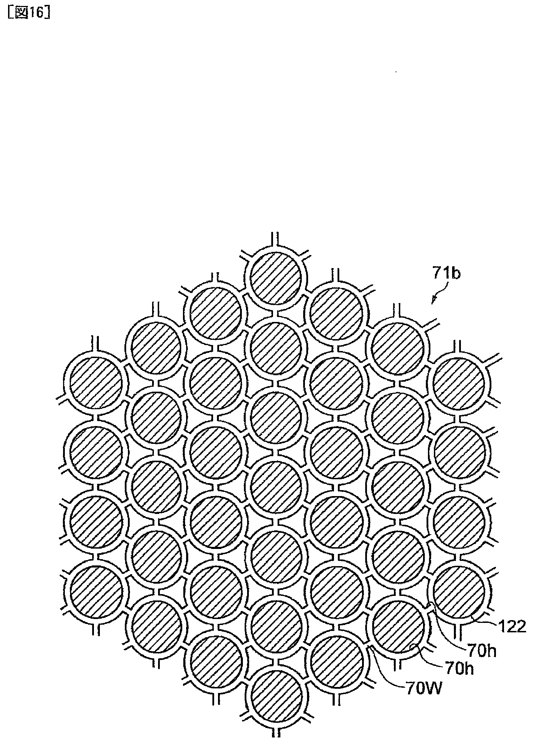

In closing the lower surface 71b, as shown in Fig. 15, in an initial state of closing in Fig. 9, closing projections 110b are inserted into each one hexagonal cell 70h that is surrounded by adjoining six hexagonal cells 70h. As described above, in the lower surface 71b, the hexagonal cells 70h into which the closing projections 110b are inserted are hexagonal cells 70h into which the closing projections 110a have not been inserted in the upper surface 71a. When the closing projections 110b are further inserted into the hexagonal cells 70h, as illustrated in Fig. 16, the cylindrical side surfaces 123 in the closing projections 110b are abutted against the partition walls 70W. The closing projections 110b are pressed so as to liquefy the partition walls 70W and to close hexagonal cells 70h into which the closing projections 110b are not inserted and that are located between hexagonal cells 70h into which the closing projections 410b have been inserted.

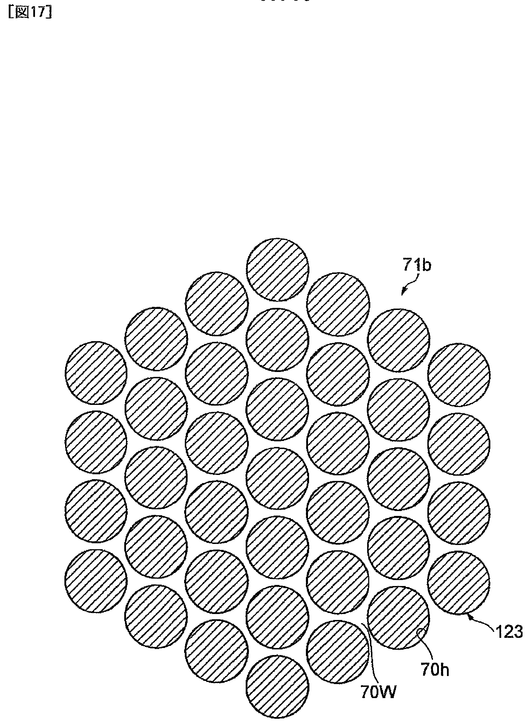

As illustrated in Fig. 10, when the closing projections 110b are further inserted into the hexagonal cells 70h, as illustrated in Fig. 17, the partition walls 70W pressed by the cylindrical side surfaces 123 in the closing projections 110b are integrally contact-bonded to each other. At the end of the contact-bonded partition walls 70W, the partition wall extended junction 75 is formed between the cylindrical side surfaces 123 in the cylindrical base 121 to complete closing. Thus, in the lower surface 71b functioning as an exhaust discharge side (an outlet side), six hexagonal cells 70h that adjoin around one hexagonal cell 70h closed in the upper surface 71a are closed.

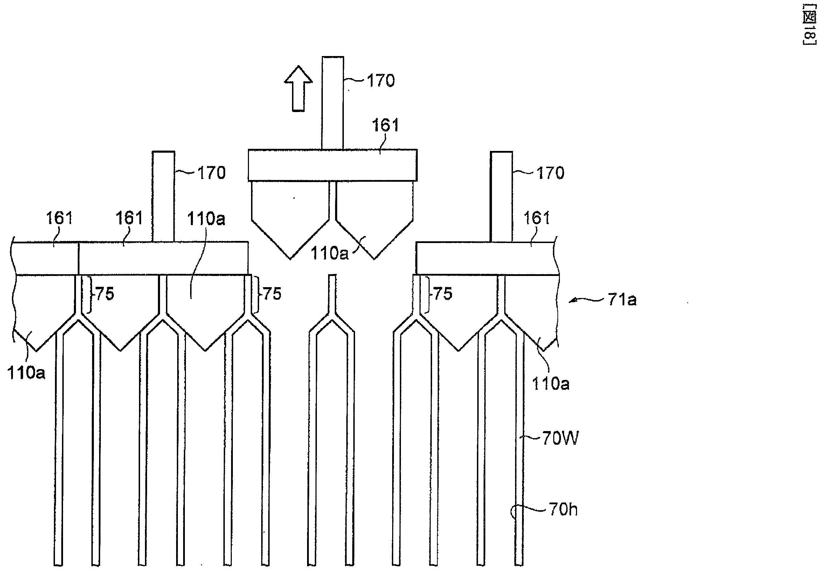

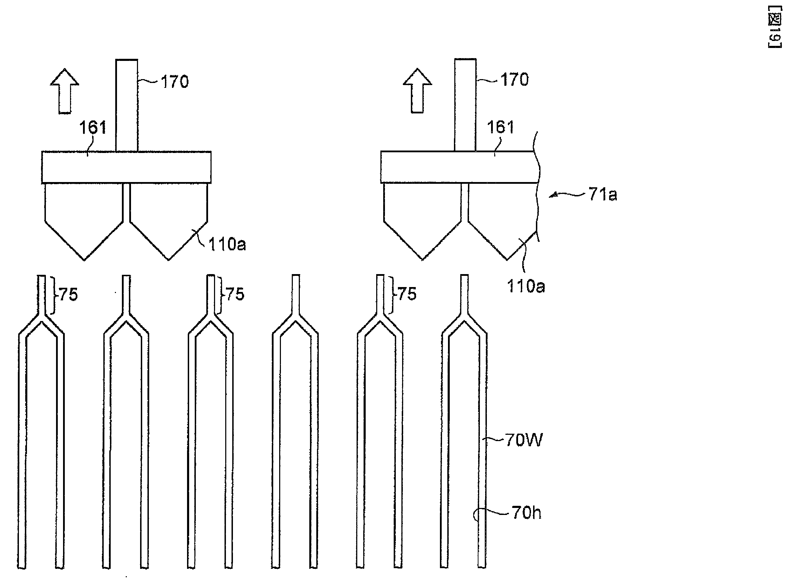

Thus, when the closing of the hexagonal cells 70h is completed, as illustrated in Fig. 18, the screw 166 is removed from the screw hole 167. Next, as indicated by an arrow in the drawing, tensile force is applied to a tool separated piece lever 170 to remove every other tool separated piece 161 from the upper surface 71 a. Next, as illustrated in Fig. 19, the remaining tool separated pieces 161 are removed from the upper surface 71 a. In this case, the removal from the upper surface 71 a may also be carried out every two or more other tool separated pieces 161. The removal of the tool separated pieces 161 may be carried out by three or more divided removal procedures. Further, the removal in this case may be carried out by successively removing the tool separated pieces 161 in one direction of the upper surface 71 a, or by successively removing the tool separated pieces 161 from the periphery of the upper surface 71a toward the center of the upper surface 71 a, or by successively removing the tool separated pieces 161 from the center of the upper surface 71 a toward the periphery of the upper surface 71 a.

Thus, after the completion of the closing at the upper surface 71a and the lower surface 71b, a firing step is carried out to produce a honeycomb structure having the same shape as the green honeycomb molded body 70 after the closing.

In this embodiment, in the method for producing a honeycomb structure, a closing tool 100 is inserted into a part of a plurality of hexagonal cells 70h in a green honeycomb molded body 70 in which a plurality of hexagonal cells 70h mutually partitioned by partition walls 70W are open in an upper surface 71 a and a lower surface 71b in a columnar body and that, by firing, becomes a honeycomb structure, thereby joining the partition walls 70W together and closing hexagonal cells 70h, and the closing tool inserted into a part of the hexagonal cells 70h is removed from the through-holes. Since the integrated closing tool 100 is simultaneously inserted into a plurality of hexagonal cells 70h, the plurality of hexagonal cells 70h can be closed simultaneously and efficiently. On the other hand, a part of the integrated closing tool 100 is separated, and the separated tool separated pieces 161 are removed from a part of the hexagonal cells 70h into which the closing tool 100 has been inserted simultaneously. Thus, the closing tool 100 can easily be removed from the hexagonal cells 70h. Therefore, the honeycomb structure can be produced more efficiently and easily.

Further, in this embodiment, by inserting the closing tool 100 into a part of the hexagonal cells 70h, joining is made so that a partition wall extended junction 75 in which the partition walls 70W are parallel to each other over a prescribed length from the upper surface 71a or the lower surface 71b is formed. Therefore, when the honeycomb structure is applied to a particulate-matter-removing filter such as a diesel particulate filter, the air resistance in the junction between the partition walls 70W is reduced and pressure loss can be reduced. Further, chipping or the like at the joined end can be made less likely to occur. When the joining is made so that the partition walls 70W become parallel to each other over a prescribed length from the upper surface 71a and the lower surface 71b, the area of contact between the partition walls 70W and the closing tool 100 is increased and, thus, the adhesion force is increased, making it difficult to remove the closing tool 100 from the hexagonal cells 70h. Further, by removing the closing tool first from portions having a low adhesion force, the shape of the honeycomb is likely to be broken. In this construction, however, a part of the integrated closing tool 100 is separated and the separated closing tool 100 is removed from a part of the hexagonal cells 70h into which the closing tool 100 has been inserted simultaneously. Therefore, even when the area of contact between the partition walls 70W and the closing tool 100 is large, the closing tool 100 can easily be removed from the hexagonal cells 70h.

It should be noted that the present invention is not limited to the above embodiment, and various modifications are possible. For example, in the above embodiment, in the closed green honeycomb molded body 70, the partition walls 70W have been closed by being contact-bonded to each other. Embodiments of the present invention are not limited to this embodiment. For example, the closed green honeycomb molded body 70 includes a green honeycomb molded body 70 in which closing is carried out by welding the partition walls 70W together through the application of ultrasonic waves. Further, the closed green honeycomb molded body 70 includes a green honeycomb molded body 70 in which the partition walls 70W are closed by being contact-bonded to each other by the application of vibration at a lower frequency than ultrasonic waves, for example, 1 kHz or less.

Further, in the above embodiment, the through-holes are described as hexagonal. However, the cell shape of the through-holes is not limited to a hexagonal shape, and other polygonal shapes (for example, quadrangular shapes or octagonal shapes), or a combination thereof is also possible. Further, for the closing tool, polygonal pyramid shapes or polygonal pyramid platform shapes are also possible according to the cell shape. Further, the shape of the tool on the inlet side and the shape of the tool on the outlet side may be different or the same.

### Industrial Applicability

According to the method for producing a honeycomb structure and the closing tool for the green honeycomb molded body according to one aspect of the present invention, a honeycomb structure can be produced more efficiently and easily.

### Reference Signs List

70...green honeycomb molded body
71a... upper surface
71b... lower surface
71c... side surface
70h... hexagonal cells
70W... partition walls
75... partition wall extended junction
100... closing tool
101... closing surface
110a, 110b...closing proj ections
111... triangular prismatic base
112... triangular pyramid-shaped tip
113... triangular prismatic side surface
115... round chamfering lateral edge
121... cylindrical base
122... conical tip
123... cylindrical side surface
150... base
161... tool separated pieces
165... separating line
166... screw
167... screw hole
170... tool separated piece lever

## Claims

1. A method for producing a honeycomb structure comprising a plurality of holes that open in an end surface of a columnar body and are mutually partitioned by partition walls, the method comprising:
a closing step of closing through-holes by inserting a closing tool into a part of a plurality of the through-holes in a green honeycomb molded body comprising the plurality of through-holes that open in the end surface of the columnar body and are mutually partitioned by partition walls to join the partition walls together; and
a removal step of removing the closing tool inserted into a part of the through-holes in the closing step from the through-holes, wherein
at the closing step, the integrated closing tool is inserted into the plurality of the through-holes simultaneously, and
at the removal step, a part of the integrated closing tool is separated and the separated closing tool is removed from a part of the through-holes into which the closing tool was inserted simultaneously at the closing step.

2. The method for producing a honeycomb structure according to claim 1, wherein, at the closing step, by inserting a closing tool into a part of the through-holes, the partition walls are joined together so that the partition walls are parallel to each other over a prescribed length from the end surface.

3. A closing tool for a green honeycomb molded body comprising a plurality of through-holes that open in an end surface of a columnar body and are mutually partitioned by partition walls, the closing tool comprising:
a base; and
a plurality of closing projections that are arranged at positions corresponding to a part of the plurality of through-holes in the base and are each inserted into a part of the plurality of through-holes to join the partition walls together, thereby closing the through-holes, wherein
the base has separated pieces with a part of the plurality of closing projections arranged therein, and
the separated pieces are integratable with and separable from the base.
